# EUROPEAN PATENT APPLICATION

(11) **EP 4 516 535 A1**
(43) Date of publication of application: **05.03.2025**
(21) Application number: 24195520.2
(22) Date of filing: 21.08.2024
(51) Int. Cl.: B60C 19/08

(54) **TIRE HAVING AN ELECTRICALLY CONDUCTIVE RUBBER STRIP**

(30) Priority: 28.08.2023 US 202318456574
(71) Applicant: The Goodyear Tire & Rubber Company, Akron, OH 44316 (US)
(72) Inventor: SCHWEITZER, Claude, L-7750 Colmar-Berg (LU); FOSAM, Richard, L-7462 Moesdorf (LU)
(74) Representative: Kutsch, Bernd

(57) **Abstract**

A tire is disclosed comprising a tread (10, 10', 10"), a pair of sidewalls (2, 2', 2"), each of the sidewalls (2, 2', 2") extending from the tread to a respective bead portion (7, 7', 7"), a carcass ply (3, 3', 3", 4, 4', 4"), and a belt ply (5, 5', 5", 6, 6', 6"). In one aspect, tread (10, 10', 10") comprises a tread strip (11, 11', 11") having an electrical volume resistivity lower than 10⁸ Ohm cm and extending from a radially outer or outermost surface of the tread (10, 10', 10") to a radially inner or innermost position of the tread wherein the tire (1, 1', 1") further comprises at least one rubber strip (12, 12', 12") having an electrical volume resistivity lower than 10⁸ Ohm cm and extending from a radially inner or innermost position of the tread strip (11, 11', 11") along a radially inner side of the tread (10, 10', 10") and at least partially along at least one of the sidewalls (2, 2', 2") towards the respective bead portion (7, 7', 7"). In another aspect, the tread (10, 10', 10") comprises a tread base layer (11‴) having an electrical volume resistivity lower than 10⁸ Ohm cm, the tire (1, 1', 1") further comprising at least one rubber strip (12, 12', 12") having an electrical volume resistivity lower than 10⁸ Ohm·cm and extending at least partially from the tread base layer (11‴) or a radially inner side of the tread base layer (11‴) along an axially outer or outermost surface of the sidewall (2, 2', 2") towards the respective bead portion (7, 7', 7").

## Description

### Field of the Invention

The present invention is directed to a tire comprising a rubber strip having an electrical volume resistivity lower than 10⁸ Ohm·cm, particularly for conducting electrical charges from the tire's bead portion to the tread of the tire. Moreover, the present invention is directed to methods of building such a tire.

### Background of the Invention

Tires need a certain electrical conductivity to allow conduction of electrostatic charges from the vehicle to the environment. In particular, this helps to prevent electrostatic shocks, e.g., when touching the car. This electrical conductivity is typically achieved by sufficient amounts of carbon black in rubber compositions in multiple tire components so as to provide a conductive pathway between rim and road surface. However, in many cases, the presence of carbon black is detrimental to reduced rolling resistance. It would be desirable to provide tires with reduced rolling resistance while ensuring sufficient electrical conductivity of the tire.

U.S. Patent Application Publication 2005/0103412 A1 discloses a tire with a rubber sidewall containing an internal electrically conductive rubber strip. This strip extends from an electrically conductive tread base layer in an area axially outside and radially below a belt portion of the tire into a bead area of the tire. An aim of this design is to conduct electrical charges from the electrically conductive tread base layer through the rubber strip arranged next to a carcass ply into an area neighboring the bead, which is also in contact with an electrically conductive chafer. While this design may provide an electrical path for some tire types it is not suitable for other tire types. Moreover, it is desirable to provide further advanced conductive passages through a tire.

### Summary of the Invention

The invention relates to a tire in accordance with claim 1.

Dependent claims refer to preferred embodiments of the invention.

A first preferred aspect of the present invention is directed to a tire comprising a tread, a pair of bead portions, a pair of sidewalls, wherein each of the sidewalls extends from the tread to a respective bead portion, at least one carcass ply, and one or more belt plies arranged radially between the tread and the at least one carcass ply in a crown area of the tire. The tread comprises a tread strip having an electrical volume resistivity lower than 10⁸ Ohm·cm and extending from a radially outer surface of the tread to a radially inner position of the tread, wherein said radially inner position is radially above the belt plies. Furthermore, the tire comprises at least one rubber strip having an electrical volume resistivity lower than 10⁸ Ohm·cm and extending from a radially inner position of the tread strip along a radially inner side of the tread towards one of the sidewalls and along one of the sidewalls towards the respective bead portion.

A second preferred aspect of the present invention is directed to a tire comprising a tread, a pair of bead portions, a pair of sidewalls, wherein each of the sidewalls extends from the tread to a respective bead portion, at least one carcass ply, and one or more belt plies arranged radially between the tread and the at least one carcass ply in a crown area of the tire. The tread comprises a tread base layer having an electrical volume resistivity lower than 10⁸ Ohm cm. Furthermore, the tire comprises at least one rubber strip having an electrical volume resistivity lower than 10⁸ Ohm·cm and extending from a radially inner side of the tread base layer and along an axially outer surface of the sidewall towards the respective bead portion.

Preferably, the rubber strip has a maximum width, measured in the circumferential direction, which is less than 100 mm.

Preferably, the tread base layer further comprises an integrally formed tread strip having an electrical volume resistivity lower than 10⁸ Ohm·cm and extending from a radially outer surface of the tread transversely to the axial direction through the tread.

Preferably, the tread further comprises at least one tread cap layer, wherein the at least one tread cap layer and the sidewalls comprise one or more of: a) one or more rubber compositions having an electrical volume resistivity which is higher than 10⁹ Ohm·cm; b) one or more rubber compositions comprising less than 45 phr carbon black; and c) one or more rubber compositions comprising carbon black having an iodine absorption of less than 90 g/kg.

### Brief Description of the Drawings

The invention will be described by way of example and with reference to the accompanying drawings in which:
FIG. 1 is a cross-sectional view of a tire comprising a first embodiment of a rubber strip;
FIG. 2 is a cross-sectional view of another tire comprising a second embodiment of a rubber strip;
FIG. 3 is a cross-sectional view of yet another tire comprising a third embodiment of a rubber strip;
FIG. 4 is a schematic sideview of the tire already shown in Figure 3; and
FIG. 5 is another schematic sideview of a tire according to another embodiment of the invention, wherein the tire has two rubber strips.

### Detailed Description of Preferred Embodiments of the Invention

According to the first aspect of the present invention, the present invention is directed to a tire comprising a tread, a pair of bead portions, a pair of sidewalls, wherein each of the sidewalls extends from the tread to a respective (one of the) bead portion(s), at least one carcass ply, and one or more belt plies arranged radially between the tread and the at least one carcass ply in a crown area of the tire. The tread comprises a tread strip having an electrical volume resistivity lower than 10⁸ Ohm·cm and extending from a radially outer surface of the tread (which contacts the road when driving) to a radially inner position of the tread (preferably through the tread, e.g., transversely through the tread), wherein said radially inner position is radially above the belt plies. Furthermore, the tire comprises at least one rubber strip having an electrical volume resistivity lower than 10⁸ Ohm·cm and extending from a radially inner (or innermost) position of the tread strip along a radially inner side (or bottom) of the tread, preferably towards one of the sidewalls, and along one of the sidewalls (e.g., in a radially inner direction) towards the respective bead portion.

The present invention provides an efficient electrically conductive pathway between the surface of the tread and the bead portion of the tire. In particular, the present invention according to the first aspect does not require electrically conductive tread cap and/or tread base layers as in the prior art. This helps to provide tires with even less electrically conductive material which allows constructions with further reduced rolling resistance.

Electrical volume resistivity is determined herein in accordance with ASTM D257-98, or equivalent.

In the second aspect of the present invention, the present invention is directed to a tire comprising a tread, a pair of bead portions, a pair of sidewalls, wherein each of the sidewalls extends from the tread to a respective bead portion, at least one carcass ply, and one or more belt plies arranged radially between the tread and the at least one carcass ply in a crown area of the tire. The tread comprises a tread base layer having an electrical volume resistivity lower than 10⁸ Ohm·cm. Furthermore, the tire comprises at least one rubber strip having an electrical volume resistivity lower than 10⁸ Ohm·cm and extending from (and at least partially along) a radially inner side of the tread base layer and along an axially outer surface of the sidewall towards the respective bead portion.

In this second aspect, electrical conduction is provided by leveraging the electrical conductivity of a tread base layer in combination with an electrically conductive rubber strip so as to provide an electrically conductive pathway between the rim / bead portion and the tire tread or the road.

Multiple embodiments are mentioned hereinbelow which may be combined with the first aspect, the second aspect, or both.

In one embodiment, the rubber strip has a maximum width, preferably measured in the circumferential direction, which is less than 100 mm or even less than 50 mm. Thus, the rubber strip does not extend over the whole circumference of the tire and/or a major part of the whole circumference of the tire.

In another embodiment, particularly in relation to the second aspect, the tread base layer further comprises an integrally formed tread strip having an electrical volume resistivity lower than 10⁸ Ohm·cm and extending from a radially outer surface of the tread (or, in other words up to the radially outer surface/side of the tread), and preferably transversely to the axial direction, through the tread. In other words, the tread strip preferably consists of the same rubber composition as the tread base layer.

In another embodiment, the tread further comprises at least one tread cap layer (such as two tread cap layers), wherein the at least one tread cap layer and/or one or both sidewalls comprise one or more of: a) one or more rubber compositions having an electrical volume resistivity which is higher than 10⁹ Ohm·cm; b) one or more rubber compositions comprising less than 45 phr carbon black; and c) one or more rubber compositions comprising carbon black having an iodine absorption of less than 90 g/kg.

In one embodiment of the invention, the rubber strip extends radially above a radially outermost belt ply (e.g., along a bottom of the tread and/or along the radially outermost belt ply) over at least 10% (preferably at least 15%) of a total axial width of the radially outermost belt ply. Optionally, it extends over less than 55%, preferably less than 50%, or even less than 25% of the total axial width of the radially outermost belt ply. It is not necessary to have an electrically conductive tread base layer extending over the whole axial width of the tread.

In another embodiment, the tread strip extends transversely to the axial direction, e.g., essentially in a radial direction or in the radial direction, through the tread. Optionally, the tread strip extends also circumferentially through the tread, e.g., over the full circumference of the tread. Optionally, the tread strip electrically connects the radially outer surface of the tread (intended to contact the road) with the radially inner surface or bottom of the tread. In other words, it provides an electrically conductive path from said surface of the tread to a radially inner bottom (surface) of the tread. Preferably, transversely to the axial direction means herein, extending in a direction perpendicular to the axial direction, i.e., the radial direction, and/or extending in a direction of an angle with the radial direction, such as less than 20°, preferably less than 10°, less than 5°, or even less than 2°.

In another embodiment, the tread strip extends straightly or essentially straightly through the tread.

In still another embodiment, the tread comprises one or more of i) at least one tread cap layer and/or a tread base layer, and ii) at least one tread cap layer but is devoid of a tread base layer. Thus, the tread may have a cap-base construction. Alternatively, the tread may only have a cap without a base. In both cases the tread cap may comprise multiple tread layers. Optionally, the tread strip extends (for instance transversely or radially) through the whole thickness of the tread. In other words, in case of a tread cap and tread base construction, the tread strip extends completely through the tread cap and tread base so as to reach the radially inner bottom of the tread. Thus, the tread strip extends preferably through all layers of the tread to reach the bottom of the tread.

In still another embodiment, apart from or except for the tread strip, the tread (optionally, each of its tread layers) has an electrical volume resistivity which is higher than 10¹⁰ Ohm·cm, preferably higher than 10¹¹ Ohm·cm or higher than 10¹² Ohm·cm. Optionally said volume resistivity is at most 10¹⁴ Ohm·cm. If the tread comprises multiple tread rubber compositions, preferably each of these tread rubber compositions has an electrical volume resistivity within one of the above ranges.

In still another embodiment, the tire is devoid of a tread base layer.

In still another embodiment, the tire is devoid of an electrically conductive tread base layer, and/or is devoid of a tread base layer having an electrical volume resistivity of less than 10⁸ Ohm·cm.

In still another embodiment, one or more of the i) tread strip, ii) rubber strip, and iii) a member, or a rubber component, of the bead portion (e.g. a chafer) have one or more of a) an electrical volume resistivity which is lower than 10⁷ Ohm·cm, preferably lower than 0.5 × 10⁷ Ohm·cm; b) a rubber composition having at least 39 phr, or 40 phr, or 50 phr, preferably at least 60 phr, of carbon black; c) a rubber composition comprising carbon black having an iodine absorption of at least 100 g/kg, preferably within a range of 100 g/kg to 300 g//kg, even more preferably within a range of 100 g/kg to 250 g/kg, or within a range of 110 g/kg to 200 g/kg. In other words, one or more of the components i) to iii) have each a rubber composition which has said electrical volume resistivity. The tread strip may comprise or consist of a tread strip rubber composition, the rubber strip may comprise or consist of a rubber strip rubber composition and the member of the bead portion may comprise or consists of a bead portion member rubber composition, such as a chafer rubber composition.

Iodine absorption or iodine absorption values (sometimes also called iodine numbers or iodine absorption numbers) are determined herein according to ASTM D1510, or equivalent.

In still another embodiment, one or more of a i) tread cap layer, ii) tread base layer, iii) one or both sidewalls, iv) the one or more belt plies, and v) an overlay of the tire, vi) one or more chafers of the tire (if not required to be electrically conductive), and vii) the at least one carcass ply comprise one or more of a) a rubber composition having an electrical volume resistivity which is higher than 10⁹ Ohm·cm, preferably higher than 10¹⁰ Ohm·cm or even higher than 10¹² Ohm·cm; b) a rubber composition having less than 45 phr of carbon black, preferably less than 40 phr of carbon black, more preferably less than 20 phr of carbon black, or even less than 10 phr of carbon black; and c) a rubber composition comprising carbon black having an iodine absorption of less than 90 g/kg, preferably less than 80 g/kg, or less than 50 g/kg. In other words, each of these components comprises or consists of a rubber composition having such a volume resistivity and/or carbon black content. In particular, the tread cap layer may comprise or consist of a tread cap layer rubber composition, the tread base layer may comprise or consist of a tread base layer rubber composition, a sidewall may comprise or consist of a sidewall rubber composition, the one or more belt plies may comprise a belt ply (coating) rubber composition, a carcass ply may comprise a carcass ply (coating) rubber composition, an overlay ply may comprise an overlay ply (coating) rubber composition, and a chafer may comprise a chafer rubber composition. Each of these rubber compositions is preferably within the claimed resistivity ranges and/or has the mentioned amount of carbon black. A minimum amount of carbon black is preferably 0.1 phr in one or more of the above compositions. However, it may also be zero, particularly in components not visible on the surface of the tire.

In still another embodiment, the rubber strip extends perpendicular or essentially perpendicular to the circumferential direction of the tire. In other words, preferably, the length of the strip does not extend in a circumferential direction of the tire.

In still another embodiment, the rubber strip has one or more of: a width, measured perpendicular to its length, within a range of 5 mm to 100 mm, preferably 10 mm to 80 mm, or more preferably 15 mm to 70 mm or to 50 mm; a thickness, measured perpendicular to its length, within a range of 0.2 mm to 3 mm, preferably 0.2 mm to 2 mm, or to only 1 mm; an essentially flat and/or rectangular cross-section perpendicular to its length; and a rectangular cross-section perpendicular to its length having an aspect ratio of thickness to width within a range of 1:5 to 1:100, or preferably 1:10 to 1: 80.

In still another embodiment, the tread strip has a (preferably maximum) width within a range of 0.2 mm to 9 mm, measured in the axial direction of the tire.

In still another embodiment, the rubber strip extends along the sidewall between the sidewall and the carcass ply and/or within the tire. Thus, the strip is not visible on the exterior of the tire and/or protected by the sidewall of the tire against damages and weather conditions such as UV light.

In still another embodiment, the tire has a chafer having an electrical volume resistivity lower than 10⁸ Ohm·cm and which is arranged at least at an axially outer side of the bead portion which is (preferably in direct) contact with the rubber strip.

In still another embodiment, a radially lower end of the rubber strip contacts a radially upper end of the chafer.

In still another embodiment, the rubber strip radially overlaps with the chafer by one or more of: i) less than 10 mm, and ii) less than 20%, preferably less than 10% of the total radial height of the chafer.

In yet another embodiment, the rubber strip radially overlaps with the chafer by at least 1 mm, preferably by at least 2 mm, 5mm or 10 mm.

In still another embodiment, the rubber strip extends radially below and along the tread (e.g. the bottom of the tread) from said radially inner position of the tread strip to an axially outermost position of the tread, and/or along the sidewall on an axially outer surface of the sidewall, and optionally along an axially outer surface of a chafer of the tire, to the bead portion or a position radially below the bead portion.

In still another embodiment, the rubber strip extends at least to a radially innermost position on the surface of the tire (at the respective bead portion). This further improves the electrical contact with a corresponding rim on which the tire can be mounted.

In still another embodiment, the rubber strip comprises a surface pattern (at least partially visible on the axially outer surface of the tire). Such a surface pattern may include one or more of: stripes, a hatching, one or more logos, letters, numbers, a barcode, a QR-code, and combinations thereof. In particular, such a pattern may include information for identification of the tire and/or its (technical) properties.

In still another embodiment, the tire comprises two rubber strips.

In still another embodiment, one rubber strip is provided on each lateral/axial side of the tire.

In yet another embodiment, the two rubber strips are provided in the same circumferential portion or circumferential/angular sector of the tire. In other words, they are (axially) oppositely arranged, which may help to avoid mass imbalances.

In still another embodiment, both rubber strips are provided on (only) one lateral/axial side of the tire, preferably at opposite circumferential positions, or in other words opposite angular sectors of the tire.

In still another embodiment, the tire has a defined direction of rotation (such as indicated on the sidewall of the tire), wherein the at least one rubber strip is provided on an (axial) inboard side of the tire. Such an arrangement may further protect the rubber strip(s) from potential damages.

In a preferred embodiment, the tire is selected from one or more of a radial tire, a pneumatic tire, a passenger car tire.

In another embodiment, a rubber composition may include at least one or more and/or one or more additional diene-based rubbers, such as one or more of styrene butadiene rubber (SBR, e.g., S-SBR or E-SBR), natural rubber (NR), synthetic polyisoprene (PI), and polybutadiene rubber (BR).

In one embodiment, a synthetic or natural polyisoprene rubber may be used. Synthetic cis-1,4-polyisoprene and natural rubber are as such well known to those having skill in the rubber art. In particular, the cis 1,4-microstructure content may be at least 90% and is typically at least 95% or even higher.

In one embodiment, cis-1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 °C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer represents the glass transition temperature of the respective elastomer in its uncured state. A glass transition temperature of an elastomer composition represents the glass transition temperature of the elastomer composition in its cured state. A Tg is determined as a peak midpoint by a differential scanning calorimeter (DSC) at a temperature rate of increase of 20° C per minute, according to ASTM D3418 or equivalent.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. The terms "compound" and "composition" and "formulation" may be used herein interchangeably, unless indicated otherwise. The terms "rubber" and "elastomer" may also be interchangeably used herein.

In another embodiment, the rubber composition includes from 1 phr to 80 phr, or from 5 phr to 80 phr, of a resin, preferably having a glass transition temperature Tg greater than 20° C. A Tg for resins is determined as a peak midpoint by a differential scanning calorimeter (DSC) at a temperature rate of increase of 10° C per minute, according to ASTM D6604 or equivalent. Preferably, the resin has a softening point above 70° C as determined by ASTM E28 which might sometimes be referred to as a ring and ball softening point. In one embodiment, the rubber composition includes from 10 phr to 60 phr or from 20 phr to 60 phr or from 30 phr to 60 phr of resin, particularly if the rubber composition is a tread cap rubber composition.

In another embodiment, the resin is selected from the group consisting of coumarone-indene resin, petroleum hydrocarbon resin, terpene polymers/resins, styrene/alphamethylstyrene resins, terpene phenol resin, rosin derived resins and copolymers and/or mixtures thereof.

A coumarone-indene resin preferably contains coumarone and indene as monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cyclopentadiene, and diolefins such as isoprene and piperlyene. Coumarone-indene resins have preferably softening points ranging from 10° C to 160° C (as measured by the ball-and-ring method). Even more preferably, the softening point ranges from 30° C to 100° C.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefines containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above, and are known as C5/C9 copolymer resins. Petroleum resins are typically available with softening points ranging from 10° C. to 120° C. Preferably, the softening point ranges from 30 to 100° C.

In an embodiment, C5 resins are aliphatic resins made from one or more of the following monomers: 1,3-pentadiene (e.g., cis or trans), 2-methyl-2-butene, cyclopentene, cyclopentadiene, and dicyclopentadiene.

In another embodiment, a C9 resin is a resin made from one or more aromatic monomers, preferably chosen from the group of indene, methylindene, vinyl toluene, styrene and methylstyrene (such as alpha-methylstyrene).

In still another embodiment, a C9 modified resin is a resin (such as a C5 resin) which has been modified or functionalized with one or more aromatic monomers, preferably chosen from the group of indene, methylindene, vinyl toluene, styrene and methylstyrene (such as alpha methylstyrene).

Terpene resins are preferably comprised of polymers of at least one of limonene, alpha pinene, beta pinene and delta-3-carene. Such resins are available with softening points ranging from 10° C to 135° C.

Terpene-phenol resins may be derived by copolymerization of phenolic monomers with terpenes such as limonenes, pinenes and delta-3-carene.

Representative for resins derived from rosins and derivatives thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

A styrene/alphamethylstyrene resin is considered herein to be a (preferably relatively short chain) copolymer of styrene and alphamethylstyrene with a styrene/alphamethylstyrene molar ratio in a range of 0.05 to 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely its styrene and alphamethylstyrene contents and by its glass transition temperature, molecular weight and molecular weight distribution.

In one embodiment, said resin is partially or fully hydrogenated.

In an embodiment, a rubber composition comprises oil, such as processing oil. Oil may be included in the rubber composition as extending oil typically used to extend elastomers. Oil may also be included in the rubber composition by addition of the oil directly during rubber compounding. Oil used may include both extending oil present in the elastomers, and (process) oil added during compounding. Suitable oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils. If used, the rubber composition may also include up to 40 phr of processing oil, preferably between 1 phr and 25 phr. Or can be, alternatively less than 10 phr oil, preferably less than 5 phr. Glass transition temperatures Tg for oils are determined as a peak midpoint by a differential scanning calorimeter (DSC) at a temperature rate of increase of 10°C per minute, according to ASTM E1356, or equivalent.

In an embodiment, a rubber composition comprises silica, particularly if it is a tread rubber composition. Silica may be for instance pyrogenic/fumed or precipitated silica. In preferred embodiments, precipitated silica is used. Silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined according to ASTM D6556 or equivalent and is described in the Journal of the American Chemical Society, Volume 60, Page 304 (1930). Silica may also be characterized by having a dibutylphthalate (DBP) absorption value in a range of 100 cm³/100g to 400 cm³/100g, alternatively 150 cm³/100g to 300 cm³/100g which is determined according to ASTM D 2414 or equivalent. Silica may have an average ultimate particle size, for example, in the range of 0.01 to 0.05 micron as determined by the electron microscope, although the silica particles may be even smaller, or possibly larger, in size. Ranges of silica use could be for instance between 1 and 120 phr, preferably in a range of between 10 phr and 70 phr herein. Various commercially available silicas may be used, such as, only for example herein, and without limitation, silicas commercially available from PPG Industries under the Hi-Sil trademark with designations 210, 315G, EZ160G, etc; silicas available from Solvay, with, for example, designations of Z1165MP and Premium200MP, etc.; and silicas available from Evonik AG with, for example, designations VN2 and Ultrasil 6000GR, 9100GR, etc.

Some examples of pre-treated silicas, which can be used, (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In an embodiment, the rubber composition may include carbon black. Representative examples of such carbon blacks include, for instance, N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades.

In one embodiment, a rubber composition may contain sulfur containing organosilicon compounds or silanes. Examples of suitable sulfur containing organosilicon compounds are of the formula:

Z ― Alk - Sₙ ― Alk ― Z I

in which Z is selected from the group consisting of 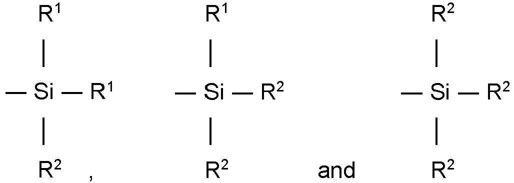 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 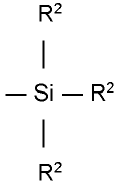 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. The amount of the compound may range from 0.5 phr to 20 phr, particularly in the case of tread rubber compositions. In one embodiment, the amount will range from 1 phr to 10 phr.

In another embodiment, a rubber composition comprises from 0.1 to 5 phr of a cobalt salt, and more preferably from 0.2 phr to 2 phr of a cobalt salt. This content may be of particular interest if used in ply coating compounds as it may amongst others improve the adhesion of the rubber coating to the ply or belt material, in particular if such material is metal, preferably brass coated metal as for instance steel. However, in another embodiment the rubber composition may be essentially cobalt free, e.g. comprise less than 0.1 phr cobalt salt or 0 phr cobalt salt. The cobalt compound will typically be a cobalt salt of a fatty acid or a cobalt salt of an aliphatic or alicyclic carboxylic acid containing from 6 to 30 carbon atoms. Some representative examples of cobalt compounds which may be used include the cobalt salts, cobalt naphthanate, cobalt linoleate, cobalt stearate, cobalt oleate, cobalt acetate, cobalt neodecanoate, cobalt tallate, cobalt resinate, cobalt acetonate, or in situ salts prepared from cobalt hydroxide and an organic acid such as naphthenic acid, stearic acid, oleic acid, acetic acid, linoleic acid and the like. Additional cobalt compounds which may be used are known under the tradename Manobond^{™} C. Manobond^{™} C is a cobalt complex of an organic acid containing boron manufactured by Manchem Company. Manobond^{™} C is described in British Patent No. 972,804, which is incorporated by reference in its entirety.

It is readily understood by those having skill in the art that a rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of the pneumatic tire of the present invention may for instance be carried out at conventional temperatures ranging from 100°C to 200°C. In one embodiment, the vulcanization is conducted at temperatures which are within a range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

In a third aspect of the present invention, the present invention is directed to a method of building a tire, preferably using a tire building drum, wherein the method includes one or more of the following steps: Providing an innerliner, optionally carrying chafers and/or toe guards, preferably onto the tire building drum; Applying one or more carcass plies (for instance onto the innerliner), optionally carrying chafers and/or toe guards; Applying two (bead) apexes (preferably onto the one or more carcass plies); Applying two beads, or in particular bead rings, and optionally folding the one or more carcass plies at least partially around the beads or bead rings; Applying two sidewalls, optionally carrying chafers and/or toe guards, on to the one or more carcass plies; Applying one or more belt plies (preferably two or more belt plies) onto the one or more carcass plies, and optionally partially onto (respective axially inner ends of) each sidewall; Applying preferably one or more overlays or overlay ply strips onto the one or more belt plies; Applying at least one rubber strip (preferably one or two rubber strips) at least onto one of the sidewalls (e.g., extending with its length in an axial direction) and optionally onto the chafer and/or toe guard (preferably overlapping with the chafer and/or toe guard), the overlay (if present) and/or at least one of the belt plies; Applying a tread onto (an axially inner portion of) the at least one rubber strip, preferably such that an axially inner end of the (or each) rubber strip contacts a radially inner end of a tread strip (preferably, extending transversely through the tread from a radially outer tread surface to a radially inner tread surface) of the tread, wherein the rubber strip optionally extends at least to a radially innermost position of the tire.

In a fourth aspect of the present invention, the invention is directed to another method for building a tire (e.g., with a tire building drum), comprising one or more of the following steps: Providing an innerliner, optionally carrying a pair of chafers and/or toe guards, e.g., onto the tire building drum; Applying one or more carcass plies, optionally carrying a pair of chafers and/or toe guards, (e.g., onto the innerliner); Applying two (bead) apexes (e.g. onto the one or more carcass plies); Applying two beads or bead rings, and optionally folding the one or more carcass plies around the beads/bead rings; Optionally, applying chafers and/or toe guards (e.g., onto the folded carcass plies); Applying belt plies (e.g., onto the one or more carcass plies); Applying an overlay; Applying a rubber strip onto the one or more carcass plies, and optionally onto the chafer, and/or the overlay, and/or at least one of the belt plies; Applying a tread onto the rubber strip (wherein the tread optionally includes a skirt portion at one or both of its axial ends), preferably such that an axially inner end of the rubber strip contacts a radially inner end of a tread strip of the tread, wherein the tread strip preferably extends transversely through the tread from a radially outer tread surface to a radially inner tread surface; Applying two sidewalls, optionally with chafers and/or toe guards (in particular, if not applied already), e.g., such that each sidewall contacts and/or covers an axially outer end of the tread (optionally including a skirt portion).

In a fifth aspect, the invention is directed to another method of building a tire, preferably using a tire building drum, wherein the method includes one or more of the following steps: Providing an innerliner, optionally carrying chafers and/or toe guards, preferably onto the tire building drum; Applying one or more carcass plies, optionally carrying chafers and/or toe guards, (for instance onto the innerliner); Applying two (bead) apexes (preferably onto the one or more carcass plies); Applying two beads, or bead rings, and optionally folding the one or more carcass plies at least partially around the beads or bead rings; Applying two sidewalls, optionally with chafers and/or toe guards (wherein one sidewall, and optionally one chafer and/or toe guard, are optionally formed in one extrudate or a calendered component, wherein the extrudate or component optionally carries at least one rubber strip), onto the one or more carcass plies; Applying one or more belt plies onto the one or more carcass plies, and optionally partially onto (respective axially inner ends of) each sidewall; Applying preferably one or more overlays or overlay ply strips onto the one or more belt plies; Applying at least one rubber strip (preferably one or two rubber strips) at least onto one of the sidewalls (e.g., extending with its length in an axial direction on a tire building drum) and optionally onto the chafer and/or toe guard (if not already applied to the sidewall, chafer and/or toe guard, such as to a sidewall, chafer and/or toe guard extrudate or calendered component), the overlay (if present) and/or at least one of the belt plies; Applying a tread onto (an axially inner portion of) the at least one rubber strip, preferably such that an axially inner end of the (or each) rubber strip contacts a radially inner end of a tread strip (preferably, extending transversely through the tread from a radially outer tread surface to a radially inner tread surface) of the tread, wherein the rubber strip optionally extends at least to a radially innermost position of the tire.

In one embodiment, the rubber strip is applied to one of i) a surface of a sidewall and chafer extrudate or ii) the surface of a calendered sidewall and/or chafer.

In another embodiment, the belt plies are applied before the rubber strip.

In still another embodiment, the rubber strip is applied before the belt plies.

In still another embodiment, the rubber strip may be formed of at least two overlapping strips, preferably partially overlapping along their length, e.g., of two adjacent strips.

In another embodiment, multiple rubber strips are applied at, preferably essentially equal, distances, or in other words spacings, within a range of 0.5 m to 3 m, wherein the rubber strip preferably extends essentially in a direction perpendicular to the extrudate or the calendered sidewall, optionally including a chafer and/or a toe guard. Thus, the sidewall, optionally including chafer and/or toe guard, can be continuously produced in extrusion or calendering, wherein at distances rubber strips are applied. One advantage of such an embodiment is that the further building of the tire, e.g., on a building drum remains essentially unchanged.

In one embodiment, the methods of the third, fourth or fifth aspect are used to build a tire according to the first aspect or second aspect, and optionally in accordance with one or more of its embodiments.

The methods according to the third, fourth and fifth aspects of the invention, and the respective tires built with such methods, may comprise all elements and features of the tires in accordance with other aspects of the invention mentioned herein and one or more of their embodiments. Furthermore, features of multiple embodiments of the present invention may be combined with one another.

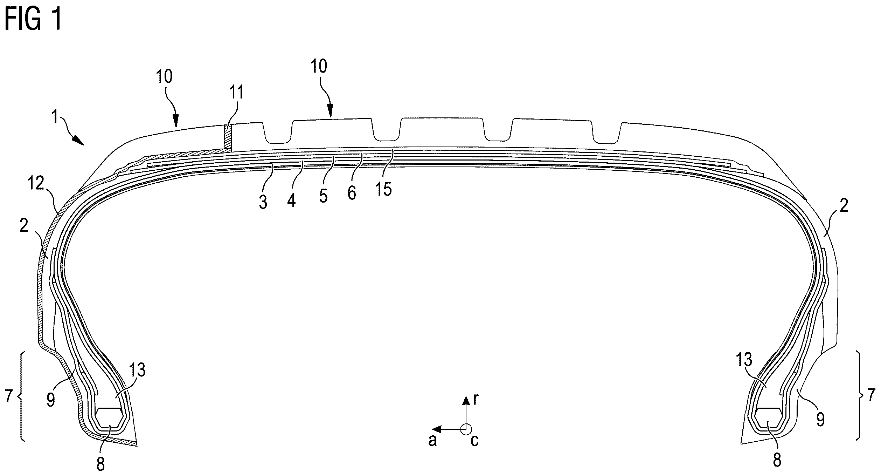

Figure 1 shows a tire 1 in accordance with a preferred embodiment of the present invention. The tire 1 has a tread 10, sidewalls 2, a first carcass ply 3, a second carcass ply 4, a first belt ply 5, a second belt ply 6, bead portions 7, beads 8, chafers 9, a tread strip 11, a rubber strip 12, apexes 13, and an overlay 15.

In accordance with the present embodiment of the invention, the tread 10 comprises a mono cap tread layer. In particular, it does not comprise in the present example a tread base. Nevertheless, it would be possible that the tread 10 comprises in another embodiment multiple horizontal tread cap layers, e.g., two tread cap layers and/or a tread base layer. Preferably, the rubber compositions of such layers are not electrically conductive, or in other words electrically insulating. Not electrically conductive is understood herein as having an electrical volume resistivity higher than 10¹⁰ Ohm cm.

In order to allow electrical conduction of electrical charges through the tread 10, the tread has an electrically conductive tread strip 11 (comprising or consisting of an electrically conductive tread strip rubber composition) which extends transversely through the tread 10. Electrically conductive is understood herein as having an electrical volume resistivity lower than 10⁸ Ohm cm. The electrically conductive strip 11, which extends circumferentially around the tire 1, is in contact with electrically conductive rubber strip at its radially inner end. In other words, the electrically conductive rubber strip comprises or consists of a rubber strip rubber composition which is electrically conductive. The rubber strip 12 extends then from the position in contact with the tread strip 11 between the tread 10 and the belt 6 (here covered by an overlay 15, as an option) until it reaches an axially outermost portion of the tread 10, where it continues to extend along an axially outer (and visible) side of the sidewall 2 towards the bead portion 7. In another embodiment (not shown), the rubber strip could also be made of two elements to ease manufacturing. In the present embodiment, the tire 1 has a chafer 9 in contact with the sidewall 2, wherein the rubber strip 12 continues proceeding along the axially outer (and visible) surface of the chafer 9 to reach a radially innermost position of the tire 1. In the present embodiment, the sidewall 2 and the chafer 9 consist of rubber compounds which are not electrically conductive so that the rubber strip 12 allows electrical charge conduction towards a rim corresponding to the tire 1 and on which the tire 1 can be mounted. In other embodiments, said chafer could be made of or comprise two chafer components, e.g., a radially upper component and a radially lower component. The radially lower component could be a toe guard. Alternatively, it is also possible to describe such a chafer as having a radially upper chafer component and a radially lower chafer component. The electrically conductive rubber strip 12 has in an example an essentially rectangular cross-section having a width of 3.5 cm and a thickness of 0.5 mm. Thus, the rubber strip 12 is quite thin / flat and could be considered as a design element of the tire apart from its technical function of providing an electrical pathway. The rubber strip could also comprise a surface pattern (at least partially visible on the axially outer surface of the tire) such as stripes, a hatching, one or more logos, letters, numbers, a barcode, a QR-code and combinations thereof.

In a preferred embodiment, the rubber composition of the rubber strip 12 has more than 50 phr of carbon black.

The rubber strip 12 according to the present embodiment comprises 25 phr natural rubber, 75 phr polybutadiene, 70 phr of carbon black, 14 phr of oil, 2 phr stearic acid, 7 phr of antidegradants, 2.5 phr of zinc oxide, 2 phr of sulfur, and 1.7 phr of accelerator. The electrical volume resistivity of this rubber composition has been determined as being below 1 × 10⁵ Ohm·cm. Moreover, an indicator for the hysteresis of the compound has been determined, i.e., tangent delta which is about 0.19. Tangent delta and G' have been determined herein with an RPA 2000^{™} Rubber Process Analyzer of the company Alpha Technologies, at 10% strain, at a frequency of 1 Hz, and a temperature of 100°C, based on ASTM D5289 or equivalent.

Other embodiments of such as rubber compositions for a rubber strip 12 include from 20 to 50 phr natural rubber or synthetic polyisoprene, from 50 to 80 phr of polybutadiene rubber, from 50 phr to 90 phr (preferably from 60 phr or 65 phr to 85 phr or 80 phr) of carbon black. Optionally, such a composition further comprises one or more of: from 1 phr to 25 phr of oil, from 3 phr to 15 phr of antidegradants (preferably from 5 phr to 10 phr of antidegradants, which may optionally comprise one or more of phenylene diamines, trimethylquinolines, and waxes), 0.5 phr to 5 phr of one or more tackifiers (such as phenolic resins), 0.5 phr to 5 phr of stearic acid, 0.5 phr to 5 phr of zinc oxide, 0.5 phr to 5 phr of sulfur, 0.5 phr to 4 phr one or more vulcanization accelerators. While the aforementioned composition provides ranges for amounts of natural rubber / synthetic polyisoprene, and polybutadiene rubber, it is also possible to utilize more natural rubber and/or polyisoprene, such as up to 100 phr of such polymers, i.e., in the absence of polybutadiene rubber. Alternatively, at most 80 phr polybutadiene rubber could be used, and/or optionally up to 50 phr styrene butadiene rubber.

Preferably, the utilized carbon black has a high surface area such as measured by iodine absorption as mentioned herein above. In an example, the carbon black is a N234 carbon black having an iodine absorption of 120 g/kg.

In the present embodiment, the rubber strip 12 is not reinforced but could be cord and/or fabric reinforced in a different embodiment, e.g., to further enhance its robustness.

In view of the low electrical resistivity of the rubber strip 12, it is possible to use a electrically non-conductive sidewall and/or chafer. In an embodiment the sidewall 2 and/or chafer 8 have a rubber composition comprising 40 phr natural rubber, 60 phr polybutadiene, 40 phr of carbon black, 4 phr of oil, 1 phr of stearic acid, 3 phr of tackfier (e.g. a phenolic resin), 8 phr of antidegradants, 2 phr of zinc oxide, 3.5 phr of sulfur, 1 phr of accelerator. The electrical volume resistivity of this rubber composition has been determined as about 1.2 × 10¹² Ohm·cm. The hysteresis indicator tangent at 10% strain has been determined at 0.07 which is significantly lower than the hysteresis of the rubber composition of the rubber strip 12. In the present embodiment, the same composition has been used for the chafer 9. Preferably, the whole casing and/or carcass may be non-conductive, e.g., including overlay(s), belts, and carcass ply or plies.

In alternative embodiments, the (electrically non-conductive) sidewall and/or chafer rubber may comprise from 20 to 50 phr natural rubber or synthetic polyisoprene, from 50 to 80 phr of polybutadiene rubber, from 0.1 phr to 45 phr (preferably from 1 phr to 40 phr) of carbon black. Optionally, such a composition further comprises one or more of: from 1 phr to 10 phr of oil, from 3 phr to 15 phr of antidegradants (preferably from 6 phr to 10 phr of antidegradants), 0.5 phr to 5 phr of one or more tackifiers (such as phenolic resins), 0.5 phr to 5 phr of stearic acid, 0.5 phr to 5 phr of zinc oxide, 0.5 phr to 5 phr of sulfur, 0.5 phr to 4 phr one or more vulcanization accelerators. While such compositions are preferred, other compositions may be possible. In particular, other amounts of natural rubber, polyisoprene, and/or polybutadiene rubber may be used. Optionally, amounts of styrene butadiene rubber could be added as well as mentioned herein above.

Preferably, the tire according to the embodiment of Figure 1 can be built in a building process, such as on a tire building drum, comprising one or more of the following steps:
Providing an innerliner, preferably comprising the chafer 9 and/or toe guard, e.g., onto the tire building drum; Applying one or more carcass plies 3, 4, (e.g., onto the innerliner); Applying two (bead) apexes 13 (e.g., onto the one or more carcass plies 3, 4); Applying two beads 8 and optionally folding the one or more carcass plies 3, 4 around beads 8; Applying two sidewalls 2, and optionally chafers 9, optionally carrying already the rubber strip 12 (thus, it is possible that a sidewall component, or a combined sidewall and chafer component, is built in an earlier step, e.g. extruded or calendered, wherein the rubber strip 12 is attached to that component already after an extrusion or calendering step); Applying the belt plies 5, 6, onto the one or more carcass plies 3, 4, and optionally partially on the sidewall 2; Applying an overlay 15; Applying the rubber strip 12 onto the sidewall 2 (e.g., in an axial direction) and the chafer 9, the overlay 15, provided that the sidewall and/or chafer does not already carry the rubber strip 12; Applying the tread 10 onto the rubber strip 12, preferably such that an axially inner end of the rubber strip 12 contacts a radially inner end of a tread strip 11 of the tread 10.

It is noted that further elements and/or tire components may be provided during the mounting process, such as but not limited to flippers, chippers, cushions, further carcass plies, further belt plies, further overlays, overlay ply strips, and further ply strips. Moreover, it is mentioned that the person skilled in the art of tire building will know how a building drum has to be operated in view of the above-mentioned steps, including rotation, change of the axial expansion of the building drum, and/or expansion of the tire during the building process. Moreover, it is emphasized that not all of the above-mentioned steps are mandatory. For instance, the tire can be built without an overlay.

In the tire 1 of Figure 1, the tread 10, or in other words the tread component, is applied onto the sidewall 2, or in other words sidewall component, which can also be described as a tread over sidewall (TOS) construction.

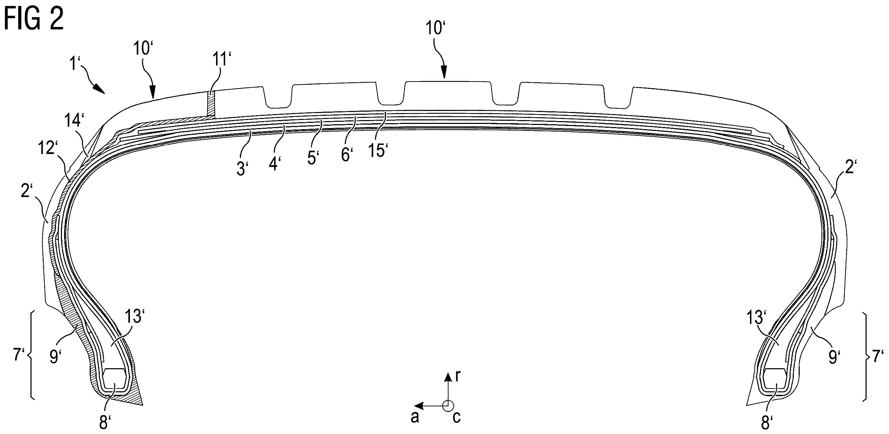

Turning now to the embodiment of Figure 2, a tire 1' has a tread 10', a sidewall 2', a first carcass ply 3', a second carcass ply 4', a first belt ply 5', a second belt ply 6', a bead portion 7', a bead 8', a chafer 9', a tread strip 11', a rubber strip 12', an apex 13', and an overlay 15'. In Figure 1, multiple of these components may be present twice in the tire 1' e.g., on each axial/lateral side of the tire 1'.

In comparison with the embodiment of Figure 1, the tire 1' of Figure 2, has a similar tread construction 10' including a tread strip 11' but has a different rubber strip 12' which extends from a radially inner position of the tread strip 11' towards the bead portion 7' being axially covered by the sidewall 2'. Thus, the rubber strip 12' extends along a radially inner side of the tread 10' (here on top of an overlay 15') and further along and below/covered by the sidewall 2' so as to end in contact with the chafer 9' which is also electrically conductive in the present embodiment. Thus, electrical charges may be transported via electrically conductive chafer 9' to the electrically conductive rubber strip 12' into the tread strip 11' onto the road. The rubber strip 12' is not visible on the surface of the tire 1'. Moreover, it is shorter than the rubber strip 12 according to the embodiment of Figure 1. The tire 1' does not have a conductive tread cap layer and/or a conductive tread base layer. In this embodiment, the tread has a skirt portion 14' which is however optional and not mandatory for the present embodiment. As in Figure 1, tire 1' could also be devoid of a skirt portion 14'. As in Figure 1, the axial direction a, the radial direction r and the circumferential direction c are also indicated in Figure 2.

The rubber composition of the rubber strip 12' may be the same or similar as mentioned in the embodiment of Figure 1. The same applies respectively to the composition of the sidewall 2'. The chafer 9' could for instance have the same or a similar electrically conductive rubber composition as the rubber strips 12, 12'.

A building process of the tire according to Figure 2 may comprise the following steps:
Providing an innerliner, preferably comprising the chafer 9' and/or toe guard, e.g., onto the tire building drum; Applying one or more carcass plies 3', 4', (e.g., onto the innerliner); Applying two (bead) apexes 13' (e.g. onto the one or more carcass plies 3', 4'); Applying two beads 8 and optionally folding the one or more carcass plies 3', 4' around beads 8'; Optionally applying chafers 9'; Applying the belt plies 5', 6', onto the one or more carcass plies 3', 4'; Applying an overlay 15; Applying the rubber strip 12' onto the one or more carcass plies 3', 4', and optionally onto the chafer 9', the overlay 15' and/or at least one of the belt plies 5', 6'; Applying the tread 10' onto the rubber strip 12', optionally including a skirt portion 14', preferably such that an axially inner end of the rubber strip 12' contacts a radially inner end of a tread strip 11' of the tread 10'; Applying two sidewalls 2' and optionally chafers 9' (in particular, if not applied yet), e.g., such that each sidewall 2' contacts and/or covers an axially outer end of the tread 10' (optionally including a skirt portion 14').

In the tire 1', a sidewall 2', or in other words a sidewall component, is applied onto an axially outer end of the tread 10' (optionally with the skirt 14' portion in between) which can also be described as a sidewall over tread (SOT) construction.

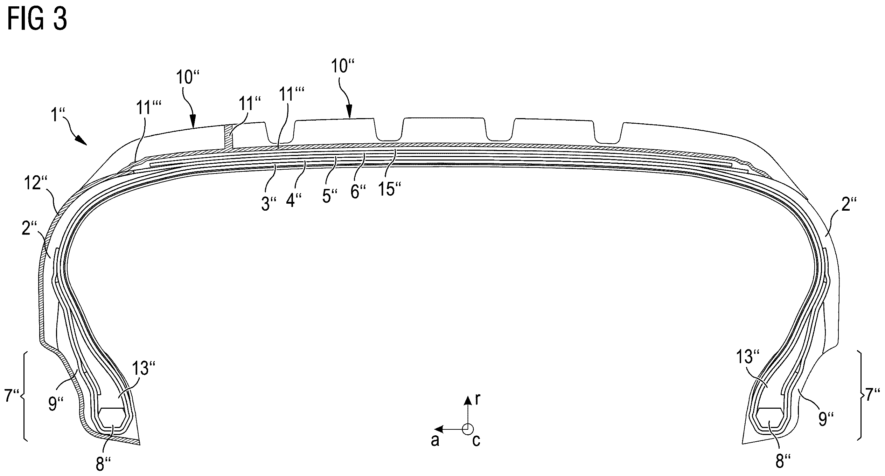

Figure 3 shows a third preferred embodiment in accordance with the present invention. The overall tire construction is similar to that of Figure 1, wherein the tire 1" of Figure 3 has a tread 10", sidewalls 2", bead portions 7" having each a bead 8", a chafer 9" and a bead apex 13". Moreover, tire 1" has two carcass plies 3", 4", two belt plies 5", 6" and an overlay 15". In contrast to the embodiment shown in Figure 1, the tire 1" of Figure 3 has a tread 10" comprising a tread base layer 11‴ and one tread cap layer. The tread base layer 11‴ comprises a tread strip 11" which is in the present example integrally formed with the tread base layer 11‴. It would also be possible that the tread strip is a separate member physically contacting the tread base layer. The tread base layer 11‴ and the tread strip 11" have an electrical volume resistivity which is lower than 10⁸ Ohm·cm. The rubber strip 12" contacts the tread base layer 11‴, preferably in an axially outer portion of the tread base layer 11‴ (and radially below the tread base layer 11‴) to provide an electrically conductive passage from the tread surface intended to contact the road, through the tread strip 11", the tread base layer 11‴ into the rubber strip 12". As shown in Figure 3, the rubber strip 12" preferably extends at least partially along the (visible) outer surface of the tire 1" to a radially inner position of the bead portion 7". Preferably, as shown in Figure 3, the rubber strip 12" extends at least to a radially innermost surface of the tire 1" and/or chafer 9" (and optionally a toe guard, not shown herein).

Similar to other embodiments mentioned herein, the electrically conductive rubber strip 12" has an essentially rectangular cross-section having in one example a width (measured in the circumferential direction) of 3.5 cm and a thickness of 0.5 mm. Thus, the rubber strip 12" is relatively thin/flat.

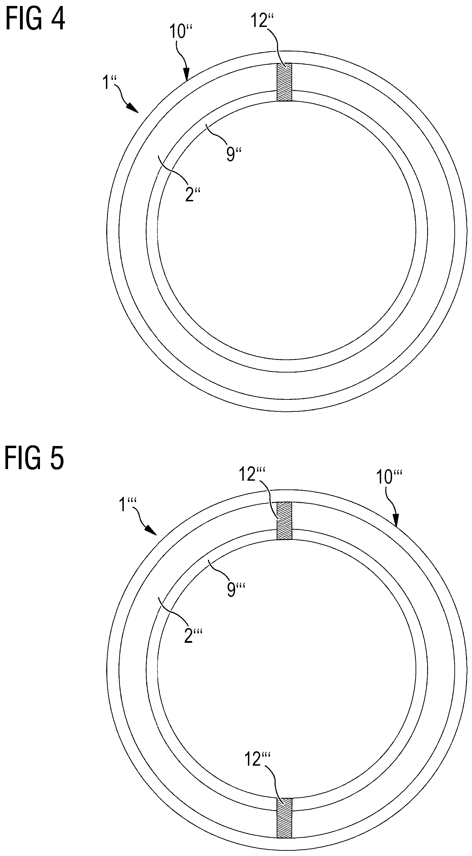

Figure 4 shows the tire 1" of Figure 3 in a schematic sideview. Tire 1" is shown with the tread 10" and the rubber strip 12" extending (in a radial direction) from below the tread 10" along the sidewall 2" and the chafer 9". While the rubber strip 12" extends in the present embodiment towards a radially innermost position of the tire 1", it is alternatively possible that the strip is radially shorter, while still being in contact with a rim when the tire is mounted to the rim. As another option, it is possible that a rubber strip is provided and/or visible on each (axial) side of the tire (not shown), preferably at the same circumferential position as described herein above. Two rubber strips may help to provide an even more reliable electrical pathway between a rim and the road. While Figure 4 shows tire 1" as already depicted in Figure 3, it is remarked that a sideview of tire 1 would be similar.

Figure 5 shows another embodiment of a tire 1‴ in a schematic side view. In this embodiment, tire 1‴ has two rubber strips 12‴ (as such the same or similar to those described in previous embodiments). Moreover, the tire 1‴ has a tread 10''', a sidewall 2‴ and a chafer 9'". Provision of two rubber strips 12‴ at opposite angular positions on the same (axial) side of the tire 1‴ helps to reduce imbalances and/or provides an even more reliable electrical pathway than by the provision of only one rubber strip.

For the sake of better comprehensibility, the electrical pathway through the tire has been indicated with the same shading in the Figures. However, this does not mean that members along that pathway, such as one or more of the tread strip, tread base layer, rubber strip, and chafer need to have the same rubber composition.

The present invention provides an advanced electrical path between the bead portion and/or rim and the tread and/or road. Such an electrical path can be provided at limited costs and/or with a limited amount of material. Furthermore, such tires can be manufactured efficiently. By providing the suggested electrical paths between rim and the tire tread, it is possible to provide tires with reduced rolling resistance.

## Claims

1. A tire comprising a tread (10, 10', 10"), a pair of bead portions (7, 7', 7"), a pair of sidewalls (2, 2', 2"), each of the sidewalls (2, 2', 2") extending from the tread to a respective bead portion (7, 7', 7"), at least one carcass ply (3, 3', 3", 4, 4', 4"), and one or more belt plies (5, 5', 5", 6, 6', 6") arranged radially between the tread (10, 10', 10") and the at least one carcass ply (3, 3', 3", 4, 4', 4") in a crown area of the tire (1, 1', 1"), wherein
(i) the tread (10, 10', 10") comprises a tread strip (11, 11', 11") having an electrical volume resistivity lower than 10⁸ Ohm·cm and extending from a radially outer or outermost surface of the tread (10, 10', 10") to a radially inner or innermost position of the tread, wherein said radially inner or innermost position is radially above the belt plies (5, 5', 5", 6, 6', 6"), and wherein the tire (1, 1', 1") further comprises at least one rubber strip (12, 12', 12") having an electrical volume resistivity lower than 10⁸ Ohm·cm and extending from a radially inner or innermost position of the tread strip (11, 11', 11") along a radially inner side of the tread (10, 10', 10") and at least partially along at least one of the sidewalls (2, 2', 2") towards the respective bead portion (7, 7', 7"); and/or
(ii) the tread (10, 10', 10") comprises a tread base layer (11‴) having an electrical volume resistivity lower than 10⁸ Ohm·cm, the tire (1, 1', 1") further comprising at least one rubber strip (12, 12', 12") having an electrical volume resistivity lower than 10⁸ Ohm·cm and extending at least partially from the tread base layer (11‴) or a radially inner side of the tread base layer (11‴) along an axially outer or outermost surface of the sidewall (2, 2', 2") towards the respective bead portion (7, 7', 7").

2. The tire according to claim 1, wherein the rubber strip (12, 12', 12") extends radially above a radially outermost belt ply (5, 5', 5", 6, 6', 6") over at least 10% of a total axial width of the radially outermost belt ply (5, 5', 5", 6, 6', 6").

3. The tire according to claim 1 or 2, wherein the tread strip (11, 11', 11") extends transversely to the axial direction through the tread (10, 10', 10").

4. The tire according to at least one of the previous claims, wherein the tread (10, 10', 10") comprises one or more of i) at least one tread cap layer and a tread base layer, ii) at least one tread cap layer and is devoid of a tread base layer; and wherein the tread strip (11, 11', 11") extends through the whole thickness of the tread (10, 10', 10").

5. The tire according to at least one of the previous claims, wherein, apart from the tread strip (11, 11', 11"), the tread (10, 10', 10") has an electrical volume resistivity which is higher than 10¹⁰ Ohm·cm.

6. The tire according to at least one of the previous claims, wherein the tire (1, 1', 1") is devoid of a tread base layer (11‴).

7. The tire according to at least one of the previous claims, wherein one or more of (i) the tread strip, ii) the rubber strip, and iii) a member of the bead portion comprise one or more of a) a rubber composition having an electrical volume resistivity which is lower than 10⁷ Ohm·cm; b) a rubber composition comprising more than 50 phr carbon black; and c) a rubber composition comprising carbon black having an iodine absorption of at least 100 g/kg.

8. The tire according to at least one of the previous claims, wherein one or more of i) the tread cap layer, ii) the tread base layer, iii) one or more of the sidewalls, iv) the one or more belt plies, v) an overlay of the tire, and vi) the at least one carcass plycomprise one or more of a) a rubber composition having an electrical volume resistivity which is higher than 10⁹ Ohm·cm; b) a rubber composition comprising less than 45 phr carbon black; and c) a rubber composition comprising carbon black having an iodine absorption of less than 90 g/kg.

9. The tire according to at least one of the previous claims, wherein the rubber strip (12, 12', 12") extends essentially perpendicularly to the circumferential direction of the tire (1, 1', 1").

10. The tire according to at least one of the previous claims, wherein the rubber strip (12, 12', 12") has one or more of: a width, measured perpendicular to its length, within a range of from 5 mm to 100 mm; a thickness, measured perpendicular to its length, within a range of from 0.2 mm to 3 mm; an essentially rectangular cross-section perpendicular to its length; a flat cross-section perpendicular to its length; a rectangular cross-section, perpendicular to its length, having an aspect ratio of thickness to width within a range of from 1:5 to 1:100.

11. The tire according to at least one of the previous claims, wherein the tread strip (11, 11', 11") has a maximum width within a range of from 0.2 mm to 9 mm, measured in the axial direction of the tire.

12. The tire according to at least one of the previous claims, wherein the rubber strip (12, 12', 12") extends along said one of the sidewalls (2, 2', 2") between said one of the sidewalls and said at least one carcass ply (3, 3', 3", 4, 4', 4") within the tire (1, 1', 1").

13. The tire according to at least one of the previous claims, wherein the tire (1, 1', 1") has a chafer (9, 9', 9") having an electrical volume resistivity lower than 10⁸ Ohm·cm which is arranged at least at an axially outer side of the respective bead portion (7, 7', 7") and which is in contact with the rubber strip (12, 12', 12").

14. The tire according to at least one of the previous claims, wherein the rubber strip (12, 12', 12") extends radially below and along the tread (10, 10', 10") from said radially inner or innermost position of the tread (10, 10', 10") to an axially outermost position of the tread and along said sidewall (2, 2', 2") on an axially outer surface of said sidewall, and, optionally, along an axially outer surface of a chafer (9, 9', 9") of the tire (1, 1', 1"), to a position radially below the respective bead portion (7; 7', 7") and/or at least to a radially innermost position on the surface of the tire (1, 1', 1").

15. The tire according to at least one of the previous claims, wherein the tire (1, 1', 1") comprises one of: two rubber strips (12, 12', 12"), wherein one rubber strip (12, 12', 12") is provided on each axial side of the tire; two rubber strips (12, 12', 12"), wherein both rubber strips (12, 12', 12") are provided on one axial side of the tire at opposite circumferential positions.
